# EUROPÄISCHE PATENTANMELDUNG

(11) **EP 1 103 833 A1**
(43) Veröffentlichungstag der Anmeldung: **30.05.2001**
(21) Anmeldenummer: 00125769.0
(22) Anmeldetag: 24.11.2000
(51) Int. Cl.: G02B 6/44

(54) **Mikro-Lichtwellenleiter-Kabel**

(30) Priorität: 25.11.1999 DE 19956781; 22.04.2000 DE 10019988
(71) Anmelder: Kerpenwerk GmbH & Co, 52224 Stolberg (DE)
(72) Erfinder: Heinen, Joachim, 52064 Aachen (DE); Jansen, Manfred, Dr., 52078 Aachen (DE)
(74) Vertreter: Castell, Klaus, Dr.-Ing.

(57) **Zusammenfassung**

Um Mikro-Lichtwellenleiter-Indoorkabel besonders kompakt und mit verbesserten mechanischen Eigenschaften zu versehen, wird vorgeschlagen, diese mit integrierten Zug- und Stützelementen zu versehen, die längs des Mikro-LWL-Indoorkabels angeordnet sind.

## Beschreibung

Die Erfindung betrifft Mikro-Lichtwellenleiter-Kabel (Mikro-LWL-Kabel). Insbesondere betrifft die Erfindung LWL-Indoor-Kabel und insofern insbesondere LWL-Datenkabel für Gebäudeverkabelungen, für Industrieverkabelungen sowie für Bus-Systeme geeignete Kabel.

Derartige Mikro-LWL-Kabel weisen eine flexible Faserumhüllung auf, in welcher Einzel-LWL-Fasern stabilisiert sind. Hierbei sind derartige Mikro-LWL-Kabel zu unterscheiden von Outdoor-Kabeln, wie sie beispielsweise in der EP 0 677 759 A1, der DE 38 15 565 A1 und der US 4,715,677 beschrieben sind. Derartige Outdoor-Kabel zeichnen sich durch eine harte Faserumhüllung aus, die es ermöglicht, den äußeren Witterungseinflüssen zu wiederstehen, wie dieses insbesondere in der US 4,715,677 betont ist. Hierbei weisen derartige Outdoor-Kabel häufig Bündeladern auf, die ein loses Bündel in der festen Faserumhüllung umfassen, wobei die Faserumhüllung hierbei mit einer gelartigen, viskosen Masse gefüllt ist. Hierbei sind die einzelnen Fasern derartiger Bündeladern jeweils etwas länger als die eigentliche Aderlänge, um die mechanischen und thermischen Eigenschaften aufgrund des hierdurch bedingten Spiels zu gewährleisten. Andererseits sind auch Outdoor-Kabel, beispielsweise aus der US 4,715,677, bekannt, bei denen Einzel-LWL-Fasern in einer harten Faserumhüllung stabilisiert, d. h. in ihrer räumlichen Beziehung zueinander fixiert sind. Derartige Einzel-LWL-Fasern entsprechen in ihrer Länge im wesentlichen der Aderlänge und sind in einer harten Faserumhüllung, beispielsweise aus mit Glasfaser verstärktem Kunststoff, stabilisiert. Derartige, mittels eines Gemenges kurzer Glasfaserfilamente verfestigte Kunststoffe sind verhältnismäßig stabil und können auch unter sehr rauen Bedingungen außerhalb von Gebäuden verlegt werden. Derartige steife Faserumhüllungen sind aus Materialen gebildet, die eine verhältnismäßig hohe Brandlast bedingen, wie dieses beispielsweise Glasfaser verstärkte Kunststoffe oder Polyethylene sind. Derartig brandlastige Materialen und dementsprechende Kabel sind daher nur für eine Außenverlegung geeignet.

Zur Gänze anders sind die Anforderungen an Indoor-Kabel bzw. Mikro-LWL-Kabel, die innerhalb von Gebäuden, häufig an Gebäudewänden oder sonstigen Bautenausformungen, meist in Kabelkanälen, verlegt werden sollen und somit möglichst mit kleinen Biegeradien sowie in verschiedenen Biegeebenen verlegbar sein sollten. Insbesondere in Kabelkanälen steht verhältnismäßig wenig Raum zur Verfügung und darüber hinaus stellen starke Kabel eine unnötig hohe Brandlast dar, so dass aus diesem Grunde möglichst kleine Kabeldurchmesser gefordert sind. Ein derartiges Mikro-LWL-Kabel ist beispielsweise aus der DE 35 06 323 A1 bekannt. Hierbei werden Einzel-LWL-Fasern zwischen zwei Bändern als Faserumhüllung einkaschiert.

Es ist Aufgabe vorliegender Erfindung, bei einem derartigen Mikro-LWL-Kabel bei gleichen Anforderungen an eine leichte Verlegbarkeit eine höhere Stabilität zu gewährleisten.

Als Lösung schlägt die Erfindung ein Mikro-LWL-Kabel mit in einer flexiblen Faserumhüllung stabilisierten Einzel-LWL-Fasern vor, welches in der Faserumhüllung integrierte Zug- und/oder Stützelemente umfasst, die längs des Mikro-LWL-Kabels angeordnet sind.

Auf diese Weise können diese Zug- und/oder Stützelemente ihre stützende Wirkung entfalten, ohne dass sie die eigentliche Elastizität einer flexiblen Faserumhüllung beeinträchtigen, da eine Biegefähigkeit längs des Kabels ohnehin durch die Einzel-LWL-Fasern eingeschränkt ist.

Die in der Faserumhüllung eingebetteten Stützelemente können Kräfte aufnehmen, die beispielsweise bei einem Schrumpfvorgang durch Temperaturänderung hervorgerufen werden und so einer Kabelbeschädigung entgegenwirken.

Vorzugsweise sind die Zug- und/oder Stützelemente in einer Stützlage angeordnet, welche die Einzel-LWL-Fasern umgibt. Eine derartige Anordnung ermöglicht ein besonders einfaches Trennen dieser jeweiligen Lagen, wodurch sich die Weiterverarbeitung, insbesondere ein Verlegen des Kabels erleichtert, insbesondere wenn die Stützlage von den Einzel-LWL-Fasern, vorzugsweise um wenigstens den halben Durchmesser der Einzel-LWL-Fasern, getrennt ausgebildet ist.

Insofern eignet sich eine derartige Anordnung insbesondere für Mikro-LWL-Kabel, bei denen die flexible Faserumhüllung unter 20 % Verstärkerfüllstoffe, vorzugsweise unter 10 % bzw. unter 5% Verstärkerfüllstoffe, wie feine Glasfilamente, aufweist. Eine derartige Anordnung weist einerseits einen ausreichend kleinen Biegeradius auf und ist andererseits durch die längs des Kabels angeordneten Zug- und/oder Stützelemente ausreichend stabilisiert.

Vorliegende Erfindung eignet sich insbesondere für Mikro-LWL-Kabel, die maximal zwölf Fasern umfassen, bei welchen die Stärke der Faserumhüllung weniger als dreimal so groß ist wie der Faserdurchmesser und/oder die einen Biegeradius unter 100 mm, vorzugsweise unter 50 mm, aufweisen. Gerade derartige Kabel sind für Indoor-Anwendungen geeignet, da sie verhältnismäßig einfach verlegbar und, wenn vorliegende Erfindung zum Einsatz kommt, dennoch ausreichend stabil sind, um normalen Indoor-Anwendungen gerecht zu werden.

Vorzugsweise sind die Einzel-LWL-Fasern in einem plastisch bzw. elastisch verformbaren Bett zueinander stabilisiert. Auf diese Weise ist trotz einer ausreichenden Beweglichkeit der Gesamtanordnung gewährleistet, dass die Einzel-LWL-Fasern in ihrer räumlichen Geometrie zueinander stabilisiert sind, so dass eine einfache Weiterverarbeitung, wie beispielsweise ein Anbinden optischer Baugruppen, ohne weiteres an den vorgegebenen Positionen erfolgen kann.

Um zu erreichen, dass das Kabel auf verhältnismäßig einfache Weise mit Steckern versehen werden kann, wird kumulativ bzw. alternativ vorgeschlagen, dass der Innenquerschnitt der Faserumhüllung wenigstens teilweise der Außenoberfläche des Faserstranges angepasst ist. Hierdurch werden die einzelnen Fasern in Ihrer Position stabilisiert, wodurch ein Stecker ohne weiteres an diesen Positionen entsprechend mit den Fasern und somit auch mit dem Kabel verbunden werden kann. Dies kann darüber hinaus das Verlegen des Kabels mit kleinen Biegeradien verbessern.

Ein Auslösen der Einzel-LWL-Fasern aus dem Kabel, insbesondere von den übrigen Einzel-LWL-Fasern lässt sich erleichtern, wenn diese voneinander getrennt in dem Kabel angeordnet sind. Es ist bei einer derartigen Anordnung beispielsweise möglich, die zwischen den Einzel-LWL-Fasern liegenden Bereiche der Faserumhüllung einfach aufzutrennen bzw. ohne weiteres zu entfernen, ohne dass die Gefahr die Einzel-LWL-Fasern zu beschädigen allzu groß wird.

Ein stabiler Aufbau und insbesondere eine verhältnismäßig wirksame Zugentlastung wird gewährleistet, wenn die Zug- und/oder Stützelemente durchgehende Einzelfäden bzw. -stäbe umfassen. Hierbei versteht es sich, dass die Fäden verzwirnt oder sonst wie aus gerichtet miteinander wirkverbundenen Einzelfilamenten bestehen können. Ebenso können verseilte Anordnungen oder massive Stäbe zu Anwendung kommen. Hierbei bezeichnet der Begriff "durchgehend" jedes Zug- und/oder Stützelement, dessen Länge länger als der größte Querschnitt des Kabels gewählt ist. Bei derartig langen Anordnungen kann davon ausgegangen werden, dass die Zug- und/oder Stützelemente ausreichend in der flexiblen Faserumhüllung reibschlüssig eingebettet sind, um eine wirksame Zugentlastung zu gewährleisten.

Darüber hinaus ist es vorteilhaft, wenn wenigstens drei, vorzugsweise wenigstens vier, der Zug- und/oder Stützelemente radial um die Einzel-LWL-Fasern angeordnet sind. Auf diese Weise ist es möglich, die Einzel-LWL-Fasern rundum wirksam gegen punktuell auftretende mechanische Belastungen zu schützen, ohne die Biegefähigkeit des Kabels zu sehr zu beeinträchtigen.

Es wird weiterhin vorgeschlagen, dass die Zug- und/oder Stützelemente Glasgarne, Aramidgarne, glasfaserverstärkte Kunststoffstäbe und/oder aramidfaserverstärkte Kunststoffstäbe umfassen. Durch die vorgeschlagenen Materialien können beispielsweise die mechanischen, thermischen und übertragungstechnischen Eigenschaften eines Lichtwellenleiterkabels bezüglich einer Langzeitstabilität oder Robustheit verbessert werden.

Die vorgeschlagenen Zug- und/oder Stützelemente können beispielsweise die bei einer Kabelverlegung auftretenden mechanischen Spannungen oder die aufgrund von thermischen Einflüssen entstehenden Spannungen aufnehmen und somit unter anderem eine Beeinträchtigung der übertragungstechnischen Eigenschaften verhindern. Darüber hinaus kann dadurch die Eignung für gängige Kabeleinzugsverfahren verbessert werden.

Das erfindungsgemäße Lichtwellenleiter-Kabel kann in einer Einschichten-Konstruktion, vorzugsweise aus strahlungshärtbaren Akrylaten aufgebaut sein, wobei die Zug- und/oder Stützelemente in dieser Schicht integriert sind.

Das erfindungsgemäße Lichtwellenleiter-Kabel kann auch so aufgebaut sein, dass die Faserumhüllung zwei Phasen, eine Außenschicht und eine Innenschicht umfasst, wobei zumindest die Außenschicht die Zug- und/oder Stützelemente aufweist.

Vorzugsweise weist lediglich die Außenschicht die Zug- und/oder Stützelemente auf, so dass ein Trennen der in der Außenschicht vorgesehenen Stützlage von den Einzel-LWL-Fasern ohne weiteres möglich ist.

Durch die Außenschicht kann einerseits die mechanische Festigkeit des Kabels wie beispielsweise die Zug-, Stauch-, und Knickfestigkeit gewährleistet werden und andererseits, eine geringe thermische Ausdehnung oder Schrumpfung bei Temperaturdifferenzen sichergestellt werden. Die Außenschicht dient somit als Schutzschicht.

Es versteht sich, dass das vorgeschlagene Kabelgrundelement mit einer weiteren Schutzhülle bzw. Ummantelung versehen werden kann bzw. dass ein entsprechendes Kabel auch aus mehreren dieser Grundelemente gebildet werden kann.

Die Schutzschicht kann darüber hinaus bei geeigneter Materialwahl die Unempfindlichkeit des Kabels gegenüber eindringender Feuchtigkeit verbessern wie auch einer Einwirkung von Chemikalien entgegenwirken.

Weiterhin kann beispielsweise die Schutzschicht aus einem halogenfreien, flammwidrigen, thermoplastischen Compound gebildet sein und dadurch die Brandeigenschaften des Kabels verbessern. Im Brandfall kann eine geringe Brandlast und dadurch eine reduzierte Rauchgasdichte wie auch eine verringerte Toxizität der Verbrennungsprodukte erreicht werden.

Durch die vorgeschlagene Schutzschicht kann eine gute Weiterverarbeitbarkeit des Kabels gewährleistet werden, wenn diese mit einer harten, glatten und gleichmäßigen Oberfläche ausgebildet wird.

Vorzugsweise umfasst die Außenschicht strahlungshärtbare Urethan-Akrylate.

Um zu erreichen, dass die Faser vor mechanischen wie vor thermischen Einflüssen geschützt wird, kann die Innenschicht als Pufferschicht ausgebildet werden. Darüber hinaus kann durch sie einem Eindringen von Feuchtigkeit entgegengewirkt und der Kabelader eine hohe Flexibilität verliehen werden.

Die Pufferschicht kann aus einem festen und trockenen, elastisch verformbaren Material z. B. Silikonakrylat, welches nicht ausläuft, sich problemlos und rückstandsfrei von einer Faser entfernen lässt und/oder ein Primärcoating der Faser nicht angreift, bestehen. Darüber hinaus kann ein Material gewählt werden, welches die Faser geometrisch weitgehend exakt zentriert bzw. fixiert und über gute Trenneigenschaften verfügt, wodurch die Fasern problemlos aus einem Aderverbund gelöst werden können. Außerdem entkoppelt eine derartige Pufferschicht die Faser von mechanischen Belastungen und thermischen Einwirkungen und kann sie vor Feuchtigkeit schützen. Darüber hinaus kann sie eine hohe Flexibilität der Ader gewährleisten.

Als Material für die Innenschicht eignen sich insbesondere silikonmodifizierte Acrylate oder Urethan-Acrylate.

Um besondere mechanische, thermische oder chemische Eigenschaften zu erzielen, können auch spezielle Werkstoffe vorteilhaft sein. In diesem Zusammenhang sind insbesondere die Brandeigenschaften, wie geringe Brandlastwerte, geringe Rauchgasdichte und geringe Toxizität der Rauchgase von Bedeutung.

Als Werkstoffe zur Erfüllung der geforderten Eigenschaften bieten sich u. a. für die Außenschicht fluorierte Thermoplaste, Polyvinylchlorid und halogenfreie, flammwidrige, thermoplastische Compounds an. Darüber hinaus sind spezielle Werkstoffe mit verbesserten Brandeigenschaften wie beispielsweise Polyetherketone, Polyetherimide, Polyurethan oder Polyamide vorteilhaft.

Dadurch, dass die Fasern sehr genau positioniert und fixiert sind, können mehrere Fasern gleichzeitig konfektioniert werden. Dies ist insbesondere im Zusammenhang mit einer Verwendung von neuartigen Steckverbindern mit Mehrfaser-Ferulen von Interesse. Darüber hinaus können Aderhüllen über große Längen konfektioniert werden.

Das erfindungsgemäße Lichtwellenleiter-Kabel eignet sich unter anderem insbesondere für die Verwendung im Zusammenspiel mit Lichtwellenleitern aus Glas bzw. aus Kunststoff.

Weitere Vorteile, Ziele und Eigenschaften vorliegender Erfindung werden anhand nachfolgender Beschreibung anliegender Zeichnungen erläutert.

Es zeigt in vereinfachter Darstellung
- Figur 1:: ein Ausführungsbeispiel eines erfindungsgemäßen Mikro-LWL-Kabels mit rotationssymmetrischen Aufbau,
- Figur 2:: ein weiteres Ausführungsbeispiel mit bandartigem Aufbau,
- Figur 3:: ein drittes Ausführungsbeispiel eines Mikro-LWL-Kabels einer rotationssymmetrischen Zweischicht-Konstruktion und
- Figur 4:: ein viertes Ausführungsbeispiel eines erfindungsgemäßen Mikro-LWL-Kabels in einer bandartigen Zweischicht-Konstruktion.

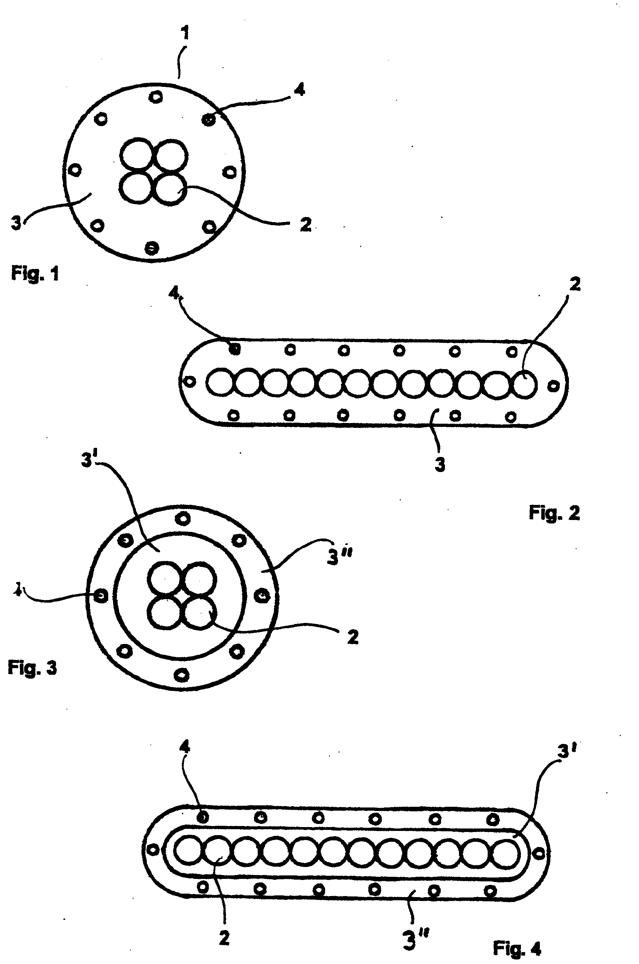

Das in der Figur 1 dargestellte Mikro-LWL-Kabel 1 weist vier optische Einzel-LWL-Fasern 2 auf, welche von der Faserumhüllung 3 umschlossen sind. Innerhalb der Faserumhüllung 3 sind Zug- und Stützelemente 4 integriert.

Die aus Aramidgarnen, Glasgarnen, oder glasfaserverstärkten Kunststoffstäben oder aramidfaserverstärkten Kunststoffstäben hergestellten Zug- und Stützelemente 4 können die empfindlichen optischen Einzel-LWL-Fasern 2 vor unzulässig hohen Belastungen, die beispielsweise bei der Kabelverlegung als Längskräfte auftreten oder aber das Mikro-LWL-Kabel 1 punktuell an einer Stelle nach radial innen belasten können, schützen. Zusätzlich können außer den mechanischen Eigenschaften auch die thermischen und optischen Eigenschaften bezüglich einer Langzeitstabilität und Robustheit verbessert werden.

In Abweichung zu der in der Figur 1 dargestellten Anzahl Einzel-LWL-Fasern 2, können bei einer bevorzugten Ausführungsform bis zu zwölf Einzel-LWL-Fasern 2 angeordnet sein. Da keine der einzelnen Fasern 2 mit einer separaten Aderumhüllung versehen ist, kann das Mikro-LWL-Kabel mit reduzierten Kosten hergestellt werden. Darüber hinaus wird der Kabeldurchmesser klein gehalten und eine gute Verlegung mit kleinen Biegeradien ermöglicht.

Die Stärke der Faserumhüllung 3 ist bei dieser Ausführungsform weniger als dreimal so groß wie der Faserdurchmesser.

Die Faserumhüllung 3 schützt die Fasern 2 vor mechanischen wie auch vor thermischen Einflüssen und wirkt dem Eindringen von Feuchtigkeit entgegen. Sie kann dem Mikro-LWL-Kabel 1 eine hohe Flexibilität verleihen.

Die Faserumhüllung 3 besteht vorzugsweise aus strahlungshärtbarem Urethan-Acrylat. Durch einen Härtungsprozess werden die Fasern 2 in Ihrer Lage fixiert. Die gute Trenneigenschaft der Faserumhüllung 3 kann eine rückstandsfreie Trennung von den Fasern 2 ermöglichen, wodurch beispielsweise die Fasern 2 problemlos aus dem Aderverbund herauslösbar sind.

Die genaue Positionierung der Fasern 2 ermöglicht darüber hinaus die gleichzeitige Konfektionierung von mehreren Fasern 2. So kann beispielsweise die Verwendung von neuartigen Steckverbindern mit Mehrfaser-Ferulen leicht realisiert werden. Darüber hinaus kann ein problemloses Ablängen einer Aderhülle über große Längen durchgeführt werden.

In Abweichung zu dem in der Figur 1 dargestellten rotationssymmetrischen Aufbau zeigt die Figur 2 ein Mikro-LWL-Kabel mit bändchenförmigen Aufbau. Es weist zwölf Fasern 2 sowie in der Faserumhüllung 3 integrierte Zug und/Stützelemente 4 auf. Der Innenquerschnitt der Faserumhüllung ist der Außenoberfläche des aus den zwölf Fasern 2 bestehenden Faserstranges angepasst. Hierdurch sind die Fasern 2 in Ihrer Position stabilisiert, wodurch ein Stecker ohne weiteres an diesen Positionen entsprechend mit den Fasern 2 und somit auch mit dem Mikro-LWL-Kabel verbunden werden kann.

Die in Figur 3 dargestellte Ausführungsform weist in Abweichung zu der Figur 1 eine rotationssymmetrische Zweischicht-Konstruktion auf. Eine strahlungshärtbare Faserumhüllung 3' umgibt die Fasern 2 und wird von einer äußeren Schutzschicht 3" umschlossen.

Die Faserumhüllung 3'wirkt als Pufferschicht und kann die Fasern 2 von mechanischen und thermischen Einwirkungen entkoppeln. Sie ersetzt die bisher aus einer gelartigen Substanz bestehende Pufferschicht. Sie wirkt dem Eindringen von Feuchtigkeit und Chemikalien entgegen und kann somit die Unempfindlichkeit des erfindungsgemäßen Mikro-LWL-Kabels gegenüber äußeren Einflüssen verbessern.

Innerhalb der äußeren Schutzschicht 3" sind Zug- und Stützelemente 4 angeordnet. Dadurch kann die mechanische Festigkeit des Mikro-LWL-Kabels wie beispielsweise die Zug-, Stauch- und Knickfestigkeit des Mikro-LWL-Kabels erhöht werden.

Die außenliegende Schutzschicht 3" besteht aus einem halogenfreien, flammwidrigen thermoplastischen Compound, welches im Brandfall eine geringe Rauchgasdichte wie auch eine verringerte Toxizität der Verbrennungsprodukte erzeugt.

Durch die harte, glatte, wie auch gleichmäßig ausgebildete Oberfläche der Schutzschicht 3", kann die Weiterverarbeitbarkeit des Mikro-LWL-Kabels in der Fertigung verbessert werden.

Figur 4 weist in Abweichung zu der Figur 2 eine bändchenförmige Zweischicht-Konstruktion der Faserumhüllung auf. Sie besteht auch in dieser Ausführung aus der äußeren Schutzschicht 3" mit den darin integrierten Zug- und Stützelementen 4 und der die Fasern 2 umschließenden und als Puffer wirkende Innenschicht 3'. Dadurch kann die mechanische Festigkeit wie beispielsweise die Zug-, Stauch- und Knickfestigkeit erhöht und das Mikro-LWL-Kabel insgesamt robuster ausgestaltet werden. Darüber hinaus werden die Fasern 2 mittels der als Puffer wirkenden Innenschicht 3' von mechanischen und thermischen Einflüssen entkoppelt. Dadurch kann eine weitere Steigerung der Kabelrobustheit erzielt werden.

Wie ersichtlich setzt sich die Faserumhüllung bei den in Figuren 3 und 4 dargestellten Ausführungsbeispielen aus der Außenschicht 3" und der Innenschicht 3' zusammen.

Bei allen Ausführungsformen umgeben die Zug- und Stützelemente 4 die Einzel-LWL-Fasern 2 radial, so dass letztere von allen Seiten wirksam gegen äußere Einflüsse geschützt sind. Darüber hinaus dienen die Zug- und Stützelemente 4 zur Zugentlastung. Durch das flexible Material zwischen den Zug- und Stützelementen 4 wird eine hohe Biegsamkeit des Mikro-LWL-Kabels gewährleistet.

Für eine Kabelausgestaltung haben sich in Abhängigkeit des Kabelaufbaus die nachfolgenden Kabeldimensionen als vorteilhaft ergeben.
1. bei rotationssymmetrischem Aufbau mit (wobei r = Durchmesser)
   1 Faser: r < 1.5 mm, insbesondere im Bereich (1,2 mm, 1,0 mm);
   2 Fasern: r < 2,0 mm, insbesondere im Bereich (1,6 mm, 1,2 mm);
   4 Fasern: r < 2,7 mm, insbesondere im Bereich (2,0 mm, 1,5 mm);
   6 Fasern: r < 3,0 mm, insbesondere im Bereich (2,5 mm, 2,2 mm);
   8 Fasern: r < 3,2 mm, insbesondere im Bereich (2,7 mm, 2,4 mm);
   12 Fasern: r < 4,2 mm, insbesondere im Bereich (3,5 mm, 3,0 mm) und
2. bei bändchenförmigen Aufbau (wobei b = Breite, h = Höhe) mit
   2 Fasern: b < 2.7 mm, insbesondere im Bereich (2,0 mm, 1,5 mm);
      h < 2,3 mm, insbesondere im Bereich (1,6 mm, 1,2 mm)
   4 Fasern: b < 3,2 mm, insbesondere im Bereich (2,5 mm, 2,0 mm);
      h < 2,3 mm, insbesondere im Bereich (1,6 mm, 1,2 mm);
   6 Fasern: b < 3,7 mm, insbesondere im Bereich (3,0 mm, 2,5 mm);
      h < 2,3 mm, insbesondere im Bereich (1,6 mm, 1,2 mm)
   8 Fasern: b < 4,2 m, insbesondere im Bereich (3,5 mm, 3,0 mm);
      h < 2,3 mm, insbesondere im Bereich (1,6 mm, 1,2 mm)
   12 Fasern: b <5,2 mm, insbesondere im Bereich (4,5 mm, 4,0 mm);
      h < 2,3 mm, insbesondere im Bereich (1,6 mm, 1,2 mm).

## Patentansprüche

1. Mikro-LWL-Kabel mit in einer flexiblen Faserumhüllung (3) stabilisierten Einzel-LWL-Fasern (2), **gekennzeichnet durch** in der Faserumhüllung (3) integrierte Zug- und/oder Stützelementen (4), die längs des Mikro-LWL-Kabels angeordnet sind.

2. Kabel nach Anspruch 1, **dadurch gekennzeichnet, dass** die Zug-und/oder Stützelemente (4) in einer Stützlage angeordnet sind, welche die Einzel-LWL-Fasern (2) umgibt.

3. Kabel nach Anspruch 1 oder 2, **gekennzeichnet durch** maximal 12 Fasern (2), die innerhalb der Faserumhüllung (3) angeordnet sind.

4. Kabel nach einem der Ansprüche 1 bis 3, **dadurch gekennzeichnet, dass** die Stärke der Faserumhüllung (3) weniger als dreimal so groß ist, wie der Faserdurchmesser.

5. Kabel nach einem der Ansprüche 1 bis 4, **gekennzeichnet durch** einen Biegeradius unter 100mm, vorzugsweise unter 50 mm.

6. Kabel nach einem der Ansprüche 1 bis 5, **dadurch gekennzeichnet, dass** die Einzel-LWL-Fasern (2) in einem plastisch bzw. elastisch verformbaren Bett zueinander stabilisiert sind.

7. Kabel nach einem der Ansprüche 1 bis 6, **dadurch gekennzeichnet, dass** der Innerquerschnitt der Faserumhüllung (3) wenigstens teilweise der Außenoberfläche des Faserstranges ais den Einzel-LWL-Fasern (2) angepasst ist.

8. Kabel nach einem der Ansprüche 1 bis 7, **dadurch gekennzeichnet, dass** die Einzel-LWL-Fasern (2) voneinander getrennt angeordnet sind.

9. Kabel nach einem der Ansprüche 1 bis 8, **dadurch gekennzeichnet, dass** die Zug- und Stützelemente (4) durchgehende Einzelfäden oder -stäbe umfassen.

10. Kabel nach einem der Ansprüche 1 bis 9, **gekennzeichnet durch** wenigstens drei, vorzugsweise wenigstens vier, Zug- und Stützelemente (4), die radial um die Einzel-LWL-Fasern (2) angeordnet sind.

11. Kabel nach einem der Ansprüche 1 bis 10, **dadurch gekennzeichnet, dass** die Zug- und/oder Stützelemente (4) Glasgarne, Aramidgarne, glasfaserverstärkte Kunststoffstäbe und/oder aramidfaserverstärkte Kunststoffstäbe umfassen.

12. Kabel nach einem der Ansprüche 1 bis 11, **dadurch gekennzeichnet, dass** die Faserumhüllung (3) zwei Phasen, eine Außenschicht (3") und eine Innenschicht (3'), umfasst, wobei zumindest die Außenschicht (3") die Zug- und/oder Stützelemente (4) aufweist.

13. Kabel nach Anspruch 12, **dadurch gekennzeichnet, dass** die Innenschicht (3') eine Pufferschicht ist.

14. Kabel nach Anspruch 12 oder 13, **dadurch gekennzeichnet, dass** die Innenschicht (3') eine fixierte Schicht zum Fixieren der Fasern (2) ist.
